# EUROPEAN PATENT SPECIFICATION

(11) **EP 1 828 931 B1**
(45) Date of publication and mention of the grant of the patent: **17.08.2022**
(21) Application number: 05815381.8
(22) Date of filing: 31.10.2005
(51) Int. Cl.: H04K 1/00, H04L 9/00

(54) **SECURE COLLABORATIVE TERMINAL IDENTITY AUTHENTICATION BETWEEN A WIRELESS COMMUNICATION DEVICE AND A WIRELESS OPERATOR**
SICHERE COLLABORATIVE ENDGERÄTEIDENTITÄTS-AUTHENTIFIKATION ZWISCHEN EINEM DRAHTLOSEN KOMMUNIKATIONSGERÄT UND EINEM DRAHTLOSEN BETREIBER
AUTHENTIFICATION D'IDENTITE TERMINAL COLLABORATIVE SECURISEE ENTRE UN DISPOSITIF DE COMMUNICATION SANS FIL ET UN OPERATEUR SANS FIL

(30) Priority: 29.10.2004 US 978276
(43) Date of publication of application: 05.09.2007
(73) Proprietor: Texas Instruments Incorporated, Dallas, Texas 75265 (US)
(72) Inventor: SHANKAR, Narendar, Dallas, TX 75254 (US); PAKSOY, Erdal, Richardson, TX 75080 (US); STURGEON, Derrill, Plano, TX 75074 (US)
(74) Representative: Zeller, Andreas
(86) International application number: PCT/US2005/039058
(87) International publication number: WO 2006/050152

(56) References cited:
- WO-A2-00/79724
- US-A- 5 473 692
- US-B1- 6 223 291
- US-B1- 6 385 728
- DANKERS J ET AL: "PUBLIC KEY INFRASTRUCTURE IN MOBILE SYSTEMS" ELECTRONICS AND COMMUNICATION ENGINEERING JOURNAL, INSTITUTION OF ELECTRICAL ENGINEERS, LONDON, GB, vol. 14, no. 5, October 2002 (2002-10), pages 180-190, XP001164849 ISSN: 0954-0695
- TORVINEN V: "Wireless PKI: Fundamentals" INTERNET CITATION, [Online] 2000, XP002223159 Retrieved from the Internet: URL:http://www.radicchio.org/downloads/smd _001.pdf> [retrieved on 2002-11-29]
- MENEZES, OORSCHOT, VANSTONE: "HANDBOOK OF APPLIED CRYPTOGRAPHY" HANDBOOK OF APPLIED CRYPTOGRAPHY, CRC PRESS SERIES ON DISCRETE MATHEMATICES AND ITS APPLICATIONS, 1997, pages 555, 556, 559, 560, 548-553, 25-28, 31, 32, XP002470033 , BOCA RATON, FL, US ISBN: 0-8493-8523-7

## Description

The present invention is directed, in general, to wireless telecommunications and, more specifically, to a system and method for secure collaborative terminal identity authentication between a wireless communication device and a wireless operator.

### BACKGROUND

"Cloning" poses a serious problem for operators of wireless telephone networks. Cloning occurs when a counterfeit wireless telephone is programmed to disguise itself so it appears to a network to be a duly subscribed, genuine telephone. The wireless network cannot tell that the telephone is counterfeit and thus provides wireless services to the counterfeit telephone. This leads to a revenue loss for wireless communication device manufacturers, since counterfeit wireless communication devices are branded with the logos of well-known wireless telephone manufacturers to make them look like name brands and sold at lower prices than the genuine telephones. This may also allow wireless calls to be made with, of course, no intention of paying the operator.

To understand cloning, one should first understand how wireless telephones authenticate themselves with a network to obtain services. All wireless telephones are assigned a unique number at their time of manufacture. When the wireless telephone adheres to the predominantly American Frequency Division Multiple Access (FDMA), Time Division Multiple Access (TDMA) or Code Division Multiple Access (CDMA) standards, the unique number is known as an Electronic Serial Number (ESN). When the wireless telephone adheres to the predominantly European Groupe Speciale Mobile (GSM) standard, the unique number is known as an International Mobile Equipment Identity (IMEI) number. To keep the present discussion as simple as possible, however, the unique number will be generically referred to herein as an "ESN/IMEI" number.

To originate a call through a wireless network, a wireless telephone transmits its ESN/IMEI number and a unique Mobile Identification Number (MIN), which amounts to its telephone number, to the wireless network. The wireless network confirms that the ESN/IMEI number and the MIN properly correspond to one another and further to a duly subscribed telephone. If so, the network grants access to services so the call can be made. If subscribed telephone. If so, the network grants access to services so the call can be made. If not, the network refuses access.

Dankers J et al: "Public Key Infrastructure in Mobile Systems" Electronics and Communication Engineering Journal, Institution of Electrical Engineers, London, GB, vol.14 no.5 October 2002 , pages 180-190 provides an overview of the basic techniues and the entities that are involved in a PKI and describes how they are used in mobile systems.

Unfortunately, cloning does not involve anything so obvious as physical theft of the genuine telephone from its user. Instead, since the genuine telephone necessarily transmits its ESN/IMEI number and MIN to the wireless network every time it begins to make a call, one need only use readily available, but decidedly illegal, equipment to intercept the ESN/IMEI number and MIN and program them into a suitable counterfeit telephone. From that point forward, the counterfeit telephone transmits exactly the same numbers as the genuine one, and the wireless network has no mechanism to discern the difference.

Some efforts have been made to inhibit cloning. Even though ESN/IMEI numbers are not secret and are in fact typically printed on the telephone and its packaging, cloning is sometimes inhibited by not broadcasting them in the open. It is inherently more difficult to intercept ESN/IMEI numbers and MINs from digital telephones than from analog telephones because CDMA and GSM transmissions are harder to intercept. Still, digital telephones remain quite clonable. Some digital telephones encrypt their ESN/IMEI numbers during transmission, but the secret keys used to perform such encryption are vulnerable to compromise. Furthermore, the premises where operators program genuine telephones may not remain secure. Lists of keys, ESN/IMEI numbers and MINs can be obtained in bulk.

What is needed in the art is a more secure way to program wireless communication devices, such as wireless telephones, such that cloning by bulk theft is frustrated. What is further needed in the art is a more secure way for wireless communication devices to authenticate themselves to a wireless network such that cloning by interception becomes difficult and preferably infeasible.

### SUMMARY

To address the above-described deficiencies of the prior art, the present invention provides systems and methods for providing a wireless communication device with secure terminal identity information and secure collaborative terminal identity authentication between the wireless communication device and a wireless operator.

The invention is defined by the appended claims.

### BRIEF DESCRIPTION OF THE DRAWINGS

For a more complete understanding of the present invention, reference is now made to the following descriptions taken in conjunction with the accompanying drawings, in which:
FIGURE 1 illustrates a schematic diagram of one embodiment of a wireless infrastructure containing a system for providing a wireless communication device with secure terminal identity information and secure collaborative terminal identity authentication between the wireless communication device and a wireless operator constructed according to the principles of the present invention;
FIGURE 2 illustrates a schematic diagram featuring the wireless communication device of FIGURE 1 in greater detail;
FIGURE 3A illustrates a block diagram of one embodiment of a system for providing a wireless communication device with secure terminal identity information constructed according to the principles of the present invention;
FIGURE 3B illustrates a block diagram of one embodiment of a system for providing a secure collaborative terminal identity authentication between a wireless communication device and a wireless operator constructed according to the principles of the present invention;
FIGURE 4 illustrates a flow diagram of one embodiment of a method of providing a wireless communication device with secure terminal identity information carried out according to the principles of the present invention;
FIGURE 5 illustrates a flow diagram of another embodiment of a method of providing a wireless communication device with secure terminal identity information carried out according to the principles of the present invention; and
FIGURE 6 illustrates a flow diagram of one embodiment of a method of secure collaborative terminal identity authentication between a wireless communication device and a wireless operator carried out according to the principles of the present invention.

### DETAILED DESCRIPTION OF THE EMBODIMENTS

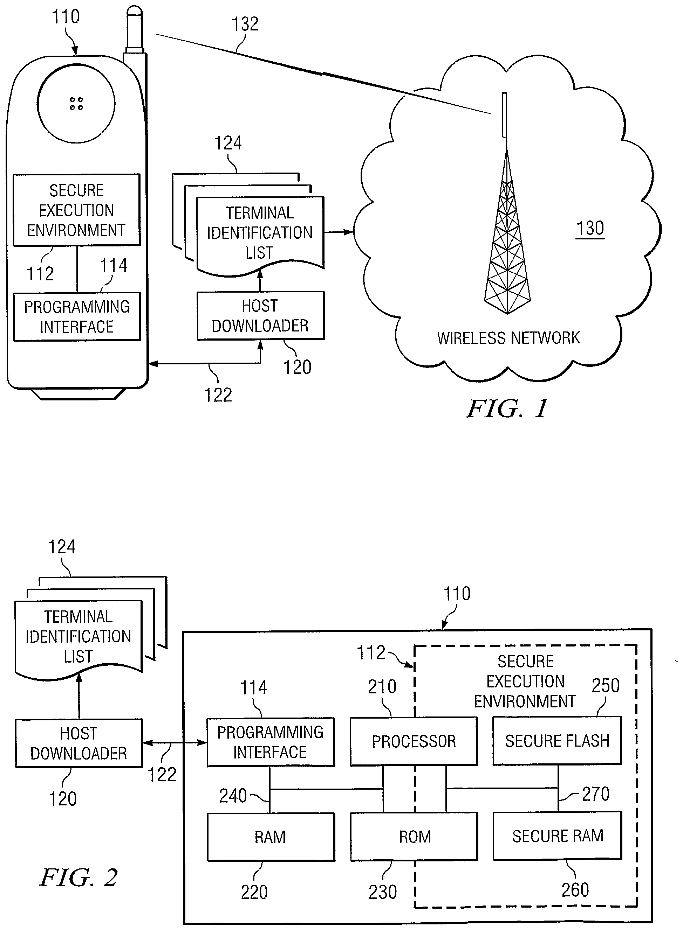

Referring initially to FIGURE 1, illustrated is a schematic diagram of one embodiment of a wireless infrastructure containing a system for providing a wireless communication device with secure terminal identity information constructed according to the principles of the present invention. The wireless infrastructure also contains a system for providing secure collaborative terminal identity authentication between the wireless communication device and a wireless operator constructed according to the principles of the present invention.

FIGURE 1 illustrates a mobile communication device 110, which is specifically a mobile telephone. The mobile communication device 110 contains a secure execution environment, or "SEE," 112. Those skilled in the pertinent art are aware that an SEE (which may be hardware-based) is designed to perform according to the following objectives: (1) programs are authenticated and therefore free of unexpected code before being admitted to run within the SEE, (2) programs and data within the SEE are free from unwanted interference from outside the SEE and (3) programs and data within the SEE cannot be read from outside the SEE. An elaborate authentication process, often involving permissions and digital signatures, is employed to meet all three objectives. Further, components within the SEE are isolated from user-accessible memory, buses or external pins to meet the second and third objectives. For this reason and as will be seen in FIGURE 2, SEEs are often provided with their own isolated, secure memory and buses. In the illustrated embodiment, the SEE 112 serves to protect secret and private keys and applications that use such keys.

In the illustrated embodiment, the wireless communication device is further an Open Multimedia Applications Platform (OMAP) device. Those skilled in the pertinent art understand that OMAP devices provide an open application programming interface for accommodating applications written by third-party developers. As is also well known, OMAP devices are designed to operate in public and secure modes. In the latter, an SEE is maintained.

A conventional programming interface 114 is coupled to the SEE 112, allowing the wireless communication device 110 to be programmed. Those skilled in the pertinent art are familiar with programming interfaces and their use, so the programming interface 114 will not be further described here.

A host downloader 120 performs the function of programming the wireless communication device 110. The term Ahost downloader@ is defined to include any secure servers that may be associated with it. Those skilled in the pertinent art understand that the host downloader is responsible for providing an image that is written, or "flashed," into flash memory (not shown, but detailed in FIGURE 2) within the wireless communication device 110 via a programming link 122. The image typically contains applications that are to execute within the wireless communication device 110. If the wireless communication device in question is equipped with an SEE, those applications often include secure libraries, which are designed to be authenticated and enter the SEE for execution therein. In the specific context of the present invention, one or more secure libraries are included in the image and are intended to execute within the SEE 112. The function of one of those secure libraries will be described below.

The illustrated embodiment of the host downloader 120 produces a terminal identification, or TI, list 124, which amounts to a database of records, or "tuples," of data pertaining to each wireless communication device 110 the host downloader 120 has programmed. A wireless operator (represented by a wireless network 130) uses the TI list 124 to authenticate wireless communication devices as they request access to the wireless network 130. A wireless transmission 132 is intended to represent the process of authentication that occurs.

Turning now to FIGURE 2, illustrated is a schematic diagram featuring the wireless communication device of FIGURE 1 in greater detail. The wireless communication device 110 is shown with its SEE 112 and programming interface 114. The host downloader 120 and associated programming link 122 and TI list 124 are also shown.

The wireless communication device 110 includes a processor 210, public random access memory (RAM) 220 and read-only memory (ROM) 230. An public bus 240 couples the processor 210 to the public RAM and ROM 230. Within the SEE 112 are secure flash memory 250 and secure RAM 260. A secure bus 270 couples the ROM 230, flash memory 250 and secure RAM 260. The public bus 240 and secure bus 270 are physically separate from one another to prevent signals traversing the secure bus 270 from being intercepted via the public bus 240. Further, the processor 210 and ROM 230 are illustrated as straddling the SEE 112, since they are capable of operating both outside of the SEE 112 in an public mode and within the SEE 112 in a secure mode.

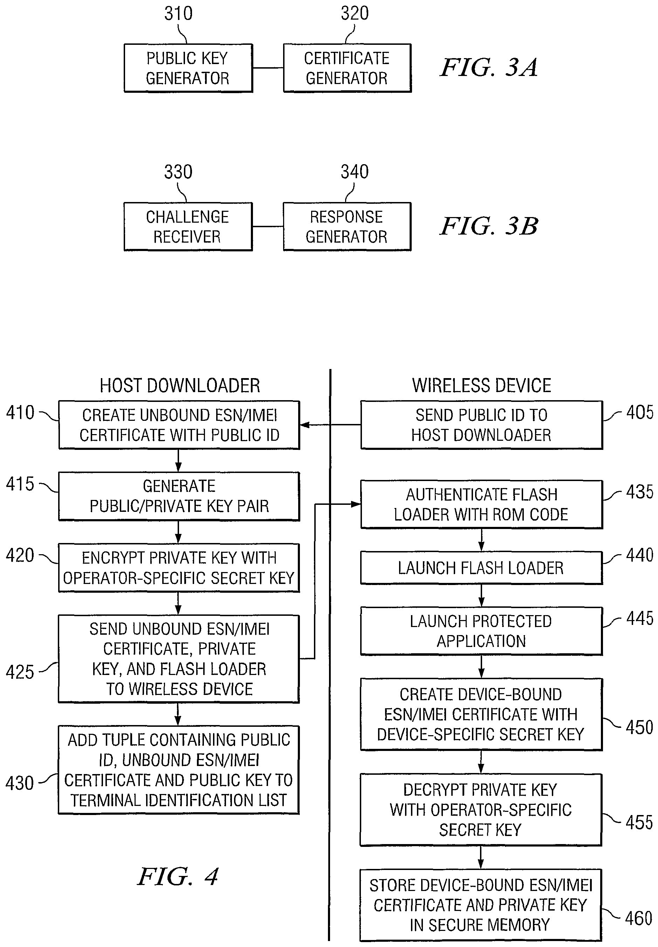

Turning now to FIGURE 3A, illustrated is a block diagram of one embodiment of a system for providing a wireless communication device with secure terminal identity information constructed according to the principles of the present invention. The system includes a public key generator 310. The public key generator 310 is configured to generate a unique public key and a unique private key based on an identity of the wireless communication device. In an embodiment to be described below, the identity is the public identification, or "ID," of the wireless communication device 110. The public key generator further causes the private key to be stored within a secure execution environment of the wireless communication device.

In one embodiment, the public key generator 310 resides within the host downloader 120 of FIGURES 1 and 2, and the private key is transmitted in a secure manner from the host downloader 120 to the wireless communication device 110 so as not to compromise the private key before it is safely lodged in the wireless communication device=s SEE 112. In an embodiment to be described below, the private key is secured by encrypting it using an operator-specific or telephone manufacturer-specific secret key preprogrammed into the wireless communication device 110. Tacitly underlying this embodiment is the assumption that the wireless communication device 110 is either incapable of internally generating public and private keys (perhaps due to processor or memory limitations) or that the required key generation steps can be performed in the host downloader 120 in a more commercially tolerable time.

In an alternative embodiment, the public key generator 310 resides within the wireless communication device=s SEE 112. The advantage of this embodiment is that the private key can remain within the SEE 112 and therefore secure. This embodiment assumes that the wireless communication device 110 is capable of internally generating public and private keys and that the required key generation steps can be performed in a commercially tolerable time.

The system further includes a certificate generator 320. The certificate generator 320 is coupled to the public key generator 310. The certificate generator 320 is configured to create a device-bound certificate based on the identity of the wireless communication device 110. In an embodiment to be described below, the identity is a device-specific secret key preprogrammed into the wireless communication device 110. The certificate generator 320 is further configured to cause the device-bound certificate to be stored within the SEE 112.

Turning now to FIGURE 3B, illustrated is a block diagram of one embodiment of a system for providing a secure collaborative terminal identity authentication between a wireless communication device and a wireless operator constructed according to the principles of the present invention. The system includes a challenge receiver 330. The challenge receiver 330 is operable within the wireless communication device 110 of FIGURES 1 and 2. The challenge receiver 330 is configured to receive a challenge from the wireless operator. The challenge perhaps has been encrypted with a public key of the wireless communication device. However, encryption of the challenge is not necessary to the present invention.

The system further includes a response generator 340. The response generator 340 is also operable within the wireless communication device. The response generator 340 is configured to generate a response to the challenge by digitally signing the challenge with a private key of the wireless communication device within a secure execution environment thereof.

In the specific embodiment of FIGURE 3B, both the challenge receiver 330 and the response generator 340 operate within the SEE 112 of FIGURES 1 and 2. Those skilled in the pertinent art will understand, however, that encryption security can be maintained by merely retaining the private key within the SEE 112 and performing all cryptographic operations with respect thereto within the SEE 112.

Turning now to FIGURE 4, illustrated is a flow diagram of one embodiment of a method of providing a wireless communication device with secure terminal identity information carried out according to the principles of the present invention. For ease of understanding, the method is visually divided in FIGURE 4 between the two apparatus involved: the host downloader 120 of FIGURES 1 and 2 and the wireless communication device 110 of FIGURES 1 and 2. Recall that the programming link 122 of FIGURE 1 couples the host downloader to the wireless communication device during programming.

In a step 405, the wireless communication device sends its preprogrammed public ID to the host downloader. The host downloader responds in a step 410 by creating from the public ID an ESN/IMEI certificate that is not bound to the wireless communication device. In a step 415, the host downloader also generates a public/private key pair based on the public ID. Then, in a step 420, the host downloader uses an operator-specific or telephone manufacturer-specific secret key to encrypt the private key just generated. The encryption is designed temporarily to protect the private key during its journey into the SEE of the wireless communication device.

Next, in a step 425, the host downloader sends the unbound ESN/IMEI certificate, the encrypted private key and a flash memory loader (a software program containing an image to be loaded into the flash memory of the wireless communication device) to the wireless communication device. Then, in a step 430, the host downloader adds a record (tuple) containing the public ID, the unbound ESN/IMEI certificate and the public key to the TI list that will eventually be provided to the wireless network for use during authentication. Advantageously, nothing in the TI list is required to remain secure.

The wireless communication device receives the transmission from the host downloader and, in a step 435, authenticates the flash loader with code stored in its ROM and enters a protected mode of operation (the SEE). Then, in a step 440, the wireless communication device launches the flash loader which, in turn, causes a secure library to be launched within the SEE in a step 445. Next, in a step 450, the secure library takes the unbound ESN/IMEI certificate and uses the device-specific secret key with which it has been preprogrammed to create a device-bound ESN/IMEI certificate.

In a step 455, the secure library uses the operator-specific or wireless communication device manufacturer-specific secret key with which it has been preprogrammed to decrypt the private key that the host downloader had generated. Finally, in a step 460, the device-bound ESN/IMEI certificate and the private key are caused to be stored in the SEE, and more specifically in the flash memory contained within the SEE. The wireless communication device is now loaded and ready for operation, at least with respect to the functions contemplated by the present invention.

The present invention also encompasses a variation of the method of FIGURE 4. Instead of the host downloader creating an unbound ESM/IMEI certificate to the wireless communication device (thereby tasking the wireless communication device with creating a device-bound ESN/IMEI certificate from the unbound ESN/IMEI certificate), the host downloader may use the wireless communication device=s public ID to create directly a device-bound ESN/IMEI certificate. The host downloader may then transmit the device-bound ESN/IMEI certificate to the wireless communication device, which the wireless communication device needs only to store in its SEE.

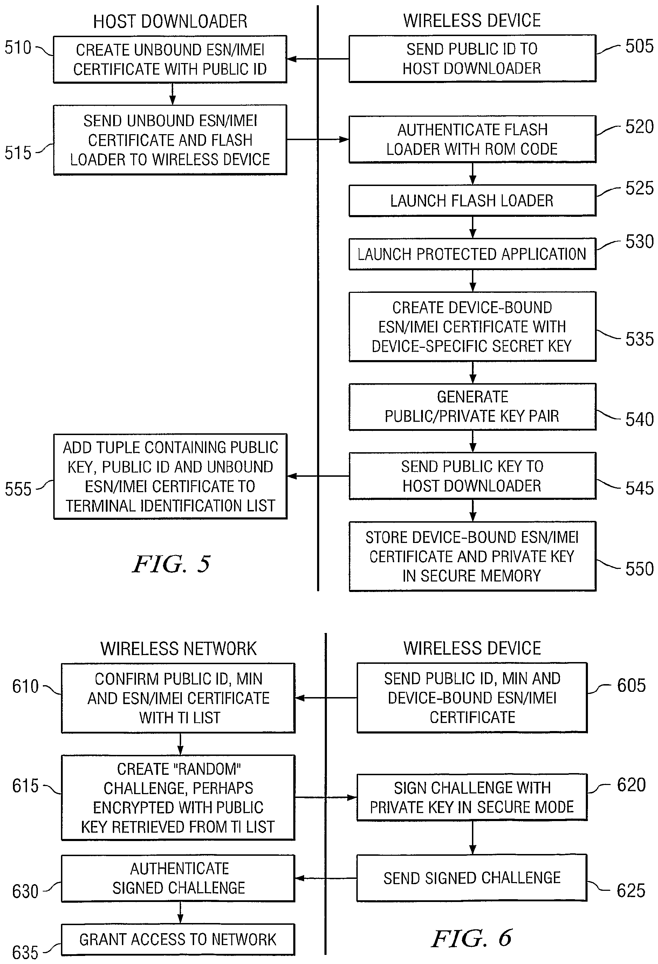

Turning now to FIGURE 5, illustrated is a flow diagram of another embodiment of a method of providing a wireless communication device with secure terminal identity information carried out according to the principles of the present invention. As with FIGURE 4, the method is visually divided in FIGURE 5 between the two apparatus involved: the host downloader 120 of FIGURES 1 and 2 and the wireless communication device 110 of FIGURES 1 and 2.

In a step 505, the wireless communication device sends its preprogrammed public ID to the host downloader. The host downloader responds in a step 510 by creating from the public ID an ESN/IMEI certificate that is not bound to the wireless communication device. In a step 515, the host downloader sends the unbound ESN/IMEI certificate and a flash memory loader to the wireless communication device.

The wireless communication device receives the transmission from the host downloader and, in a step 520, authenticates the flash loader with code stored in its ROM and enters a protected mode of operation (the SEE). Then, in a step 525, the wireless communication device launches the flash loader which, in turn, causes a secure library to be launched within the SEE in a step 530. Next, in a step 535, the secure library takes the unbound ESN/IMEI certificate and uses the device-specific secret key with which it has been preprogrammed to create a device-bound ESN/IMEI certificate.

In a step 540, the wireless communication device generates a public/private key pair based on its preprogrammed public ID. Then, in a step 545, the wireless communication device transmits the public key to the host downloader. Since the key being transmitted is public, the wireless communication device does not need to encrypt it beforehand.

In a step 550, the device-bound ESN/IMEI certificate and the private key are caused to be stored in the SEE, and more specifically in the flash memory contained within the SEE.

Finally, in a step 555, the host downloader adds a record (tuple) containing the public ID, the unbound ESN/IMEI certificate and the public key to the TI list that will eventually be provided to the wireless network for use during authentication. Again, nothing in the TI list is required to remain secure. And as before, the wireless communication device is now loaded and ready for operation, at least with respect to the functions contemplated by the present invention.

Turning now to FIGURE 6, illustrated is a flow diagram of one embodiment of a method of secure collaborative terminal identity authentication between a wireless communication device and a wireless operator carried out according to the principles of the present invention. The method is visually divided in FIGURE 6 between the two apparatus involved: the wireless network 130 of FIGURE 1 and the wireless communication device 110 of FIGURES 1 and 2.

The method begins in a step 605 when a wireless communication device requests access to wireless network services. The wireless communication device sends its public ID, MIN and the ESN/IMEI to the wireless network. In a step 610, the wireless network uses the TI list it has available to confirm that the public ID, MIN and ESN/IMEI. Assuming the wireless communication device passes this threshold test of authenticity, the wireless network generates a Arandom@ challenge and optionally encrypts the challenge in a step 615. "Random" is in quotes, because the challenge need not be statistically random; in the illustrated embodiment the challenge is pseudorandom, which is satisfactory. The wireless network transmits the challenge to the wireless communication device.

In a step 620, the wireless communication device receives the challenge into its SEE, illustrated embodiment the challenge is pseudorandom, which is satisfactory. The wireless network transmits the challenge to the wireless communication device.

In a step 620, the wireless communication device receives the challenge into its SEE, where it forms a response to the challenge by digitally signing it with its stored private key. Those skilled in the pertinent art are familiar with the concept of digitally signing for purposes of generating responses to challenges. Then, in a step 625, the mobile communication device sends the response (signed challenge) back to the wireless network. In a step 630, the wireless network authenticates the response. Those skilled in the pertinent art are also familiar with the manner in which responses are authenticated. If the response is authentic, the wireless network grants access in a step 635. Otherwise, the wireless network refuses access.

## Claims

1. A method of providing a wireless communication device (110) with secure terminal identity information, comprising:
generating (415) a unique public key and a corresponding unique private key for said wireless communication device (110) outside said wireless communication device;
creating (450), within a secure execution environment (112) of said wireless communication device, a device-bound certificate based on an identity of said wireless communication device with a device-specific secret key; and
causing (460) said private key and said device-bound certificate to be stored within the secure execution environment (112) of said wireless communication device; and
**characterized in that**
the device-bound certificate is created using an unbound certificate created in an external device.

2. The method as recited in Claim 1, wherein said generating (415) is carried out in a host downloader (120) and said method further comprises encrypting (420) said private key with a selected one of an operator-specific secret key and a wireless communication device manufacturer-specific secret key before transmitting (425) said private key toward said secure execution environment (112).

3. The method as recited in Claim 1 or 2, wherein said generating (540) is carried out in said secure execution environment (112).

4. The method as recited in any preceding claim, wherein said device-bound certificate is based on a device-specific secret key preprogrammed into said secure execution environment (112).

5. A system for providing a wireless communication device (110) with secure terminal identity information, comprising:
a public key generator (310) configured to generate a unique public key and a unique private key for said wireless communication device (110) and cause said private key to be stored within a secure execution environment (112) of said wireless communication device; and
a certificate generator (320) coupled to said public key generator (310) and configured to create a device-bound certificate based on an identity of said wireless communication device (110) with a device-specific secret key, wherein said certificate generator (320) is located within said wireless communication device (110) and is configured to cause said device-bound certificate to be stored within said secure execution environment (112); and **characterized in that** the device-bound certificate is created using an unbound certificate created in an external device.

## Patentansprüche

1. Verfahren zum Versehen eines drahtlosen Kommunikationsgerätes (110) mit sicheren Endgeräte-Identitätsinformationen, das Folgendes umfasst:
Erzeugen (415) eines eindeutigen öffentlichen Schlüssels und eines entsprechenden eindeutigen privaten Schlüssels für das drahtlose Kommunikationsgerät (110) außerhalb des drahtlosen Kommunikationsgerätes;
Erzeugen (450), innerhalb einer sicheren Ausführungsumgebung (112) des drahtlosen Kommunikationsgerätes, eines gerätegebundenen Zertifikats basierend auf einer Identität des drahtlosen Kommunikationsgerätes mit einem gerätespezifischen geheimen Schlüssel; und
Bewirken (460), dass der private Schlüssel und das gerätegebundene Zertifikat innerhalb der sicheren Ausführungsumgebung (112) des drahtlosen Kommunikationsgerätes gespeichert werden; und
**dadurch gekennzeichnet, dass** das gerätegebundene Zertifikat unter Verwendung eines in einem externen Gerät erzeugten ungebundenen Zertifikats erzeugt wird.

2. Verfahren nach Anspruch 1, wobei das Erzeugen (415) in einem Host-Downloader (120) durchgeführt wird und das Verfahren ferner das Verschlüsseln (420) des privaten Schlüssels mit einem ausgewählten Schlüssel aus einem betreiberspezifischen geheimen Schlüssel und einem herstellerspezifischen geheimen Schlüssel für drahtlose Kommunikationsgeräte umfasst, bevor der private Schlüssel an die sichere Ausführungsumgebung (112) übertragen wird (425).

3. Verfahren nach Anspruch 1 oder 2, wobei die Erzeugung (540) in der sicheren Ausführungsumgebung (112) durchgeführt wird.

4. Verfahren nach einem der vorhergehenden Ansprüche, wobei das gerätegebundene Zertifikat auf einem gerätespezifischen geheimen Schlüssel basiert, der in der sicheren Ausführungsumgebung (112) vorprogrammiert ist.

5. System zum Versehen eines drahtlosen Kommunikationsgerätes (110) mit sicheren Endgeräte-Identitätsinformationen, das Folgendes umfasst:
einen Generator des öffentlichen Schlüssels (310), der so ausgebildet ist, dass er einen eindeutigen öffentlichen Schlüssel und einen eindeutigen privaten Schlüssel für das drahtlose Kommunikationsgerät (110) erzeugt und bewirkt, dass der private Schlüssel in einer sicheren Ausführungsumgebung (112) des drahtlosen Kommunikationsgerätes gespeichert wird; und
einen Zertifikatsgenerator (320), der mit dem Generator des öffentlichen Schlüssels (310) gekoppelt und so ausgebildet ist, dass er ein gerätegebundenes Zertifikat auf der Grundlage einer Identität des drahtlosen Kommunikationsgerätes (110) mit einem gerätespezifischen geheimen Schlüssel erzeugt,
wobei sich der Zertifikatsgenerator (320) innerhalb des drahtlosen Kommunikationsgerätes (110) befindet und so ausgebildet ist, dass er bewirkt, dass das gerätegebundene Zertifikat innerhalb der sicheren Ausführungsumgebung (112) gespeichert wird; und
**dadurch gekennzeichnet, dass** das gerätegebundene Zertifikat unter Verwendung eines in einem externen Gerät erzeugten ungebundenen Zertifikats erzeugt wird.

## Revendications

1. Procédé permettant de fournir à un dispositif de communication sans fil (110) des informations d'identité de terminal sécurisées, le procédé comprenant les étapes suivantes :
générer (415) une clé publique unique et une clé privée unique correspondante pour ledit dispositif de communication sans fil (110) à l'extérieur dudit dispositif de communication sans fil ;
créer (450), dans un environnement d'exécution sécurisé (112) dudit dispositif de communication sans fil, un certificat lié au dispositif basé sur une identité dudit dispositif de communication sans fil avec une clé secrète spécifique au dispositif ; et
faire en sorte (460) que ladite clé privée et ledit certificat lié au dispositif soient stockés dans l'environnement d'exécution sécurisé (112) dudit dispositif de communication sans fil ; et
**caractérisé en ce que** :
le certificat lié au dispositif est créé en utilisant un certificat non lié créé dans un dispositif externe.

2. Procédé tel que décrit dans la revendication 1, dans lequel ladite génération (415) est effectuée dans un téléchargeur hôte (120) et ledit procédé comprend en outre le cryptage (420) de ladite clé privée avec une clé sélectionnée parmi une clé secrète spécifique à un opérateur et une clé secrète spécifique à un fabricant de dispositif de communication sans fil avant de transmettre (425) ladite clé privée vers ledit environnement d'exécution sécurisé (112).

3. Procédé tel que décrit dans la revendication 1 ou la revendication 2, dans lequel ladite génération (540) est effectuée dans ledit environnement d'exécution sécurisé (112).

4. Procédé tel que décrit dans l'une quelconque des revendications précédentes, dans lequel ledit certificat lié au dispositif est basé sur une clé secrète spécifique au dispositif préprogrammée dans ledit environnement d'exécution sécurisé (112) .

5. Système pour fournir à un dispositif de communication sans fil (110) des informations d'identité de terminal sécurisées, le système comprenant :
un générateur de clé publique (310) configuré pour générer une clé publique unique et une clé privée unique pour ledit dispositif de communication sans fil (110) et faire en sorte que ladite clé privée soit stockée dans un environnement d'exécution sécurisé (112) dudit dispositif de communication sans fil ; et
un générateur de certificat (320) couplé audit générateur de clé publique (310) et configuré pour créer un certificat lié au dispositif sur la base d'une identité dudit dispositif de communication sans fil (110) avec une clé secrète spécifique au dispositif, où :
ledit générateur de certificat (320) est situé à l'intérieur dudit dispositif de communication sans fil (110) et est configuré pour faire en sorte que ledit certificat lié au dispositif soit stocké dans ledit environnement d'exécution sécurisé (112) ; et **caractérisé en ce que** le certificat lié au dispositif est créé en utilisant un certificat non lié créé dans un dispositif externe.
